# EUROPEAN PATENT APPLICATION

(11) **EP 1 868 140 A1**
(43) Date of publication of application: **19.12.2007**
(21) Application number: 06115612.1
(22) Date of filing: 16.06.2006
(51) Int. Cl.: G06K 19/077, G06F 21/00, H01C 10/50, H01H 1/029, C08K 3/22, H01B 1/22

(54) **Contactless card with membrane switch made of an elasto-resistive material**

(71) Applicant: Assa Abloy Identification Technology Group AB, 107 23 Stockholm (SE)
(72) Inventor: Bielmann, Marc, 1635 La Tour-de-Trême (CH); Curty, Jari-Pascal, 1260 Nyon (CH)
(74) Representative: Grosfillier, Philippe

(57) **Abstract**

The card (1), such as a credit card or other similar card, comprises at least a RFID chip module (3) and an antenna (4). The antenna (4) is interrupted in an interruption zone with two separated contact ends (5',5") and a contacting material (10) is placed in said interruption zone in order to enable a contact between said two separated ends (5',5"). Said contacting material (10) becomes conductive under pressure so that the antenna is functional only when the contacting material (10) is put under pressure by a user.

## Description

### Field of the Invention

The present invention concerns a switch mounted on contactless cards, in particular credit cards, for improving security of said card and reducing the risk of forgery.

### State of the art

Contactless cards with a switch are known in the art. Such chip cards usually incorporates one or several switches which can be manually operated and allow the electronics or parts of the electronics of the card to be manually switched on or off so as to release data and characteristics of the chip card only in accordance with the choice of the user of the chip card. This renders the unauthorised identification of the chip card more difficult. The activation of such a card by switches in the plastic card is also possible in emergency situations.

A typical example is disclosed in DE 197 42 1236 which relates to a portable data medium with an activation switch. In this prior art, a switching device operated by the user is connected between the antenna and the chip so that reception of data is only possible after activation of the switching device. Further examples are given by DE 195 42 900, US 5,376,778 and US 4,897,644.

PCT publication WO 98/20450 discloses an identification card with a transaction coil and a method for manufacturing such card. The transaction coil is formed from a silver or generally conductive paste silk screen component which is incorporated in a plastic card body corresponding to the conventional ISO standards and whose ends are subsequently bared by means of a milling process for implanting a special chip module, or whose contact ends have already been kept free in a lamination or injection-molding process, and whose contacting can only be realized by intentionally exerting pressure and becomes automatically inactive after ending this pressure. The deliberate switching of a transponder coil is essential in this case. However, this card is also very elaborate as regards its manufacture and, in operation, it is sensitive to disturbances.

More recently, for example in WO 05/062245, the idea is to provide an antenna switch which allows, in a switched on position, the electrical contacting of two antenna pads such that the contactless communication with a reader is enabled. In a switched-off position, the pads of the antenna are electrically disconnected and the contactless communication with the reader is disabled.

Other similar devices are known from US 2003/132301, DE 10140662, US 5,696,363 and US 6,343,744.

All the examples cited above propose a mechanical switch, however, rather complicated from a manufacturing point of view and, in operation, it is sensitive to disturbances.

Other examples of an electronic card with a function which can be manually activated but avoiding the use of a mechanical switch are known from US 6,424,029 and FR 2 728 710.

In US 6,424,029, a chip card is described, preferably a contactless chip card, comprising a data-processing circuit for receiving, processing and/or transmitting data signals, and at least a capacitive switching element which can be activated by means of a user's touch. The activation of the switching element triggers at least the transmission of data signals from the data-processing circuit and without whose activation at least the transmission of data signals from the data-processing circuit is prevented.

In FR 2 728 710, the electronic card has a plastic body comprising the function components that are fed from the battery. The battery is connected to a sensor whose physical properties vary due to its manual operation. An electronic circuit monitors the operation of the function components independently of the state of the sensor. A resistance strain gauge may be used as a sensor which reacts to bending of the card, or a thermistor may be used which responds to the warmth of a user's finger touching the card. The sensor may also comprise pairs of electrodes between which the resistance changes upon a user's touch. For a reliable operation, the components should only be activated when the rate of change of the physical property detected by the sensor is within a predetermined range.

These sensors have proved to be unreliable. For example, the responses of a thermistor or a thermoelement or the resistor between two electrodes may be dependent on the temperature of the user's finger or on the fact whether the user wears gloves.

### Summary of the invention

An aim of the invention is to provide an improved antenna and contactless card.

Another aim of the invention is to provide a simple system that is easy to manufacture, to use and reliable.

An idea of the invention is to provide an antenna, for a card, such as a credit card or other similar card, in which said card supports at least a RFID chip module and said antenna is connected to said module, wherein said antenna is interrupted in an interruption zone with two separated contact ends, and wherein a contacting material is placed in said interruption zone in order to enable a contact between said two separated ends, wherein said contacting material becomes conductive under pressure so that the antenna is functional only when the contacting material is put under pressure by a user.

In another aspect, the invention relates to a card, such as a credit card or other similar card, with at least a RFID chip module and an antenna, wherein the antenna is as defined in the above paragraph.

In a further aspect, the invention also relates to methods and processes to manufacture a card according to the present invention.

According to the invention, the solution defined in the claims is extremely simple and can be manufactured in volume with existing equipment. It can also be applied retroactively to existing cards.

It also uses no mechanical moving parts.

The switch according to the invention can be easily manufactured after the lamination of the card, avoiding the use of cold lamination.
The elasto-resistive material used as a switching means can be injected as a paste or a powder in a cavity of the card and then cured to accommodate perfectly in the cavity. No special tolerance (precision) is requested for the milling process.

Preferably, the elasto-resistive material is known per se, for example as provided by Peratech or Dupont. Examples of such material are given in WO 05/029514, US 2004/252007, US 6,646,540, US 6,291,568, EP 0 289 193, GB 2054 277, US 4,258,100, US 4,028,276 and US 4,054,540.

### Detailed description of the invention

The invention will be better understood in the text below together with the following drawings:
Figure 1 shows a first embodiment of a card according the invention
Figure 2 shows a first state of the manufacture of the card of the figure 1
Figure 3 shows a second state of the manufacture of the card of the figure 1
Figure 4 shows a third state of the manufacture of the card of the figure 1
Figure 5 shows a second embodiment of a card according the invention
Figure 6 shows a detail of the embodiment of figure 2
Figure 7 shows a third embodiment of a card according the invention
Figure 8 shows a fourth embodiment of a card according the invention and
Figure 9 shows a fifth embodiment of a card according the invention

To start with, one manufactures an ISO card with Printed or Wire Embedded antenna by using a standard process.

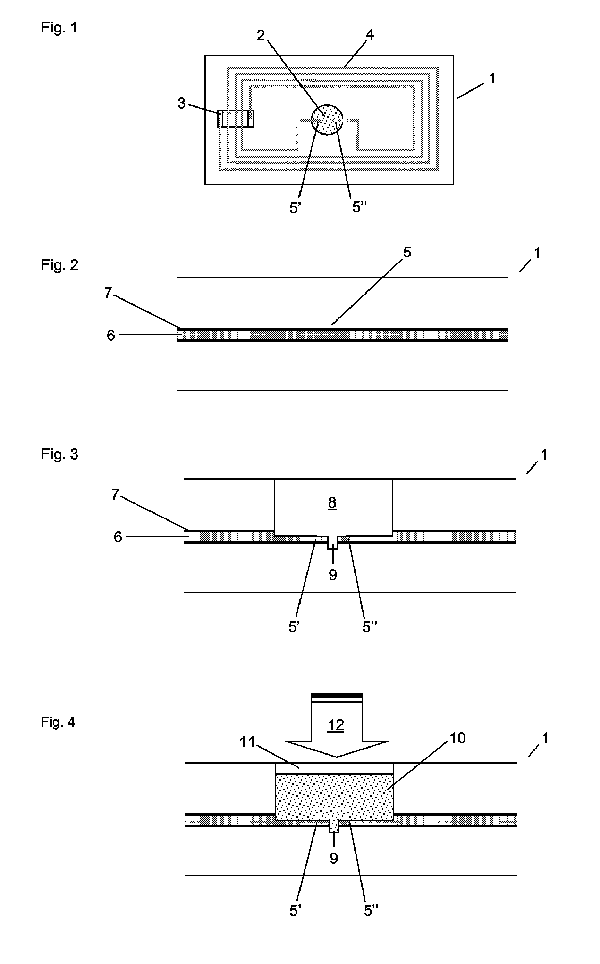

In the antenna design of figure 1, one just separates one of the track from the others. The antenna can be manufacture by any technique known in the art as wire embedding, printing, etching, etc.... In the embodiment illustred in figure 1 to 4, the antenna is made with a wire embedded wire 6, for example of copper with an insulation coating 7.

Figure 2 shows a detail of the card of the figure 1 before the manufacture of the switch.

Then, as shown in figure 3, one mills a cavity 8 in the card by using a standard milling process as for chip embedding for contact cards or dual interface cards.
This milling operation (by the manufacture of the secondary cavity 9) cuts the track (e.g. wire) of the antenna which leads to an open circuit.

Of course, any milling process can be used. Important is that the wire forming the antenna is cut and that a part of the two extremities 5' and 5" of the wire are stripped in the cavity. One can manufacture a simple cavity (without step i.e without secondacry cavity 9) deep enough to cut the wire. In such a case, the conductive interfaces between the core of the wires and the elasto-resistive correspond to the parts of the side wall of the cavity occupied by the wires. Preferably, a such cavity would be conical, to present larger interface surfaces of the wires.

Then, as shown in Figure 4, one places into this milled area a material 10 which has the characteristics of being conductive under pressure. Basically when one presses (12) on it, it closes the open circuit and then the card is readable since the antenna is fully functional.
Preferably, the cavity 8 is not totally filled with the elasto-resistive material 10to avoid unwanted action of the switch.

An isultation cover layer (nor represented) could be put over the upper surface of the material 10, in order to avoid any resistive interference of the antenna with the finger of the user when pressing on the switch.

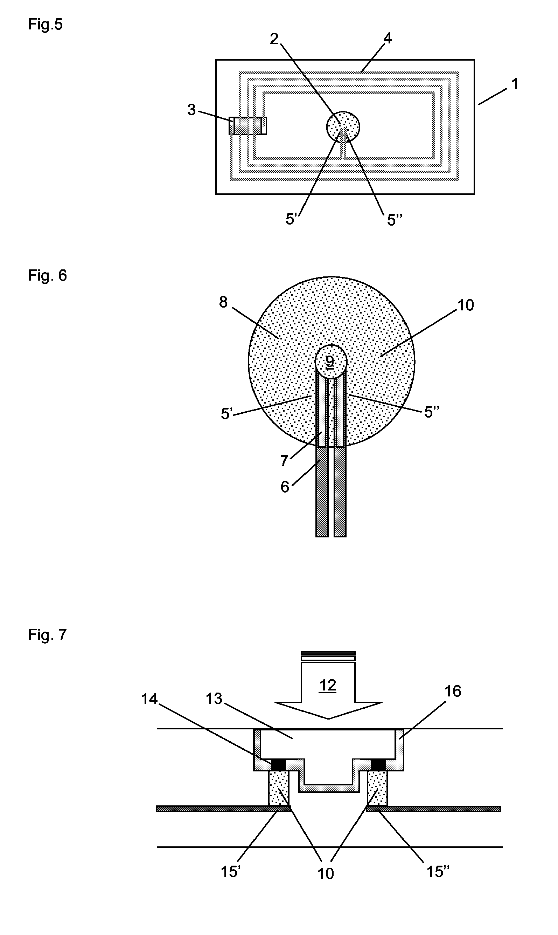

Figure 5 shows a similar embodiment to Figure 1, in which the antenna design is slightly different. One makes a narrow bend resulting in the two close parallel wire shown in a more detailed manner in figure 6. The wire is stripped during the milling operation of the main cavity 8, and the tip of the bend is cut during the milling of the secondary cavity 9, resulting in the two stripped wire extremities 5' and 5" in the cavity 8.
Once again, the cavities 8 and 9 are (partially) filled with an ER (or QTC) material.

Figures 6 and 7 show different embodiments of the invention, where the antenna is not cut during the milling, but presents contact extremities 15' and 15" from the beginning. The common idea of these embodiments is to connect these extremities with an elasto-resistive switch.

Figure 7 shows a contact and contactless card according the invention. The main design and manufacture process is identical to the one known in the art, for example from EP 0 671 705. The main difference is that the two columns between the contact pads 14 of the chip module 13 and the contact extremities 15' and 15" of the antenna 4 are filled with a elasto-resistive material 10. Pressing on the chip module 13 makes the material 10 conductive and allows the card to be read. The module 13 as to be fixed in a movable manner in the cavity. This could be achieved for example by using a elastic filler 16 as fixing mean, allowing the pressure of a finger on the chip module to be transmitted (at least partially) to elato-resistive material 10.

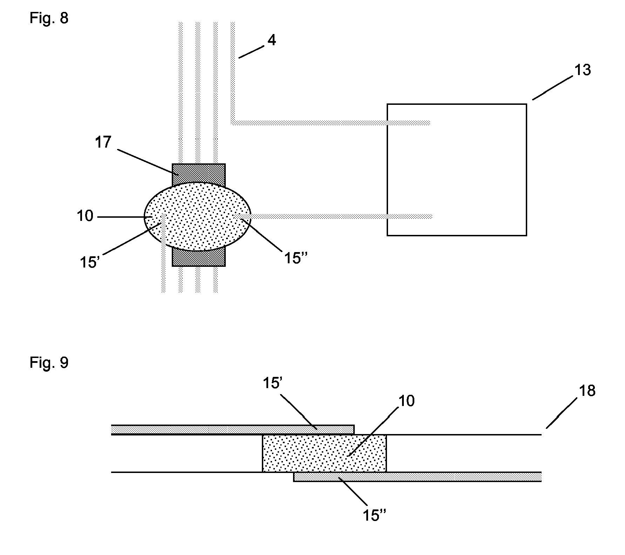

Figure 8 illustrates the manufacture of an antenna bridge (as known in the art) including a switch according the invention. In the prior art, in particular for printed antenna, one has to create a bridge over the antenna loops in order to close the circuit formed by the antenna 4 and the chip module 13. In the present invention, first in the space between the two extremities 15' and 15", an insulating layer 17 is applied to cover and to isolate the antenna loops. Then, an elasto-resistive material 10 is applied over the bridge isolation layer 17, in order to connect the two contact extremities 15' and 15" of the antenna.

Figure 9 shows another embodiment of the invention. The elasto-resistive material can be from the beginning integrated in a recess of the core support layer 18 of the card inlay. The antenna is then manufactured as an open circuit with two free extremities placed on the material 10. In figure 9, the material fills a through hole of the core layer and the two antenna parts are placed on each side of the core layer. It is of course possible to have both antenna parts on the same side of the layer. Placing the elasto-resistive material 10 in the core layer from the beginning of the manufacture process avoid the milling step (with the antenna in the card core).

### List of numerical references :

- 1: card
- 2: switch
- 3: chip module
- 4: antenna
- 5: antenna wire before milling
- 5', 5": extremities of antenna wire
- 6: core of antenna wire
- 7: isolation of antenna wire
- 8: main milled cavity
- 9: secondary milled cavity
- 10: elasto-resistive material
- 11: unfilled part of the cavity
- 12: pressure action on the switch (with finger)
- 13: chip module (contact and contactless type)
- 14: contact pads of the module
- 15',15": contact extremities of the antenna
- 16: fixing elastic material
- 17: bridge isolation layer
- 18: core support layer of a card inlay

## Claims

1. An antenna (4) for a card, such as a credit card or other similar card, in which said card supports at least a RFID chip module and said antenna (4) is connected to said module, wherein said antenna (4) is interrupted in an interruption zone with two separated contact ends (5',5"), wherein a contacting material (10) is placed in said interruption zone in order to enable a contact between said two separated ends (5',5"), wherein said contacting material (10) becomes conductive under pressure so that the antenna is functional only when the contacting material (10) is put under pressure by a user.

2. An antenna as defined in claim 1, wherein the contacting material is an elasto-resistive (ER) material.

3. An antenna as defined in claim 1, wherein the contacting material is a quantum tunnelling composite (QTC) material.

4. A card (1), such as a credit card or other similar card, with at least a RFID chip module (3) and an antenna (4), wherein the antenna (4) is an antenna as defined in one of claims 1 to 3, and wherein the card (1) comprises means for receiving said contacting material (10).

5. A card as defined in claim 4, wherein said means for receiving contacting material comprises a cavity (8,9) formed by milling and containing said interruption zone.

6. A card as defined in claim 5, wherein said cavity (8,9) is not entirely filled with contacting material (10).

7. A card as defined in one of claims 5 or 6, wherein said contacting material (10) is covered with an insulating cover.

8. A card as defined in claim 4, wherein said means for receiving contacting material are made of two columns, and said card comprises a cavity in which the chip module (13) is movably inserted, said columns connecting two contacts (14) of the chip module (13) each with one the said two separated contact ends (5',5") of the antenna 4, in such a way that only when a card user apply a pressure on said module, this is transmitted to the contacting material (10) in said columns thus realizing the electrical contact between the antenna (4) and the contacts of said module (13).

9. A card as defined in claim 4, wherein said means for receiving said contacting material is conductive bridge connecting the two contact extremities (15',15") of the antenna over the antenna loops, the antenna loops being isolated of the conductive material (10) by an isolative layer, such that the bridge is activated and is conductive only when a card user apply a pressure on the said contacting material (10).

10. A card as defined in claim 4, wherein said means for receiving said contacting material (10) is a recess in said card, said recess being filled with contacting material (10), said interruption zone being formed by ending the antenna on each side of said recess.

11. A process for making a card as defined in one of claims 4 to 8, wherein the process comprises at least the following steps:
- providing a card with a chip module and an antenna connected thereto;
- milling the card thus forming a cavity containing a contact zone and interrupting the antenna;
- depositing a contacting material in said cavity
such that only when put under pressure by the card user the contacting material can be used to overcome the interruption of the antenna and render the antenna fully functional.

12. A process for making a card as defined in one of claims 4 or 10, wherein the process comprises at least the following steps:
- providing a core layer for a card with a recess;
- filling said recess with contacting material
- depositing an antenna on said card whereby said antenna is formed as an open circuit with two antenna parts connected to the contacting material.
